# EUROPEAN PATENT SPECIFICATION

(11) **EP 3 961 873 B1**
(45) Date of publication and mention of the grant of the patent: **20.08.2025**
(21) Application number: 19940161.3
(22) Date of filing: 17.10.2019
(51) Int. Cl.: H02K 5/173, H02K 11/00, H02K 5/08, H02K 11/40

(54) **MOTOR AND ELECTRICAL EQUIPMENT HAVING SAME**
MOTOR UND ELEKTRISCHES GERÄT DAMIT
MOTEUR ET ÉQUIPEMENT ÉLECTRIQUE ÉQUIPÉ DE CELUI-CI

(30) Priority: 26.07.2019 CN 201910684730
(43) Date of publication of application: 02.03.2022
(73) Proprietor: Guangdong Welling Motor Manufacturing Co., Ltd., Foshan, Guangdong 528311 (CN)
(72) Inventor: LI, Guoxiong, Foshan, Guangdong 528311 (CN); HOU, Junfeng, Foshan, Guangdong 528311 (CN); CHEN, Dan, Foshan, Guangdong 528311 (CN); LV, Jifang, Foshan, Guangdong 528311 (CN); HUANG, Chengdong, Foshan, Guangdong 528311 (CN); ZENG, Luqiang, Foshan, Guangdong 528311 (CN); LV, Yuchan, Foshan, Guangdong 528311 (CN)
(74) Representative: Whitlock, Holly Elizabeth Ann
(86) International application number: PCT/CN2019/111665
(87) International publication number: WO 2021/017191

(56) References cited:
- CN-A- 103 840 632
- CN-A- 107 850 321
- CN-U- 203 984 139
- CN-U- 207 782 608
- DE-B3- 102007 019 828
- JP-A- 2013 078 251
- JP-A- 2014 039 420
- JP-A- 2016 149 916

## Description

### TECHNICAL FIELD

The present application relates to the technical field of motor, and more particularly to a motor improved to prevent electric corrosion of bearing and electrical equipment having the motor.

### BACKGROUND

In recent years, due to the energy-saving trend of electrical equipment, the motors used are usually high-efficiency brushless DC motors instead of induction motors. For example, air-conditioning units use high-efficiency brushless DC motors to drive fans. These brushless DC motors are driven by inverters, which use pulse width modulation (hereinafter referred to as PWM) as the driving method. In the use of this PWM driving method, the neutral point potential of the winding is not zero and a common mode voltage is generated. In the case of high frequency, a coupling capacitance will be generated between the motor structures, and the common mode voltage will form a loop through the coupling capacitance between the stator, the rotor, the permanent magnet, the end cover, and other parts and the bearing capacitance, thereby generating voltage on the bearing capacitance branch. The voltage generated between the inner and outer rings of the bearing (bearing capacitance branch) due to the common mode voltage is called the shaft voltage. The shaft voltage contains the high-frequency components of the high-speed switching action during the semiconductor during PWM driving. If the shaft voltage reaches the insulation breakdown voltage of the lubricating oil film inside the bearing, it will discharge and generate current, which will cause partial melting corrosion phenomenon of the inner surface of the bearing and the balls, this is what we call bearing electrical corrosion. When the electric corrosion progresses gradually, wave-shaped wear will occur on the bearing, which will eventually cause abnormal noise and decrease the life of the bearing.

In order to prevent electrical corrosion of bearings, many solutions have been proposed in the industry, which can be roughly summarized into the following three types: (1) Making the inner and outer rings of the bearing in a conductive state, (2) Making the inner and outer rings of the bearing in a reliable insulated state, (3) Reduce the shaft voltage. For the method (1), it has been proposed to use conductive bearing grease, but it is actually difficult to apply because it cannot achieve the same service life as non-conductive grease and high cost. In addition, there is also a way to install a conductive brush on the shaft, which will cause problems such as wear of the brush, need for installation space, high implementation cost, and need for maintenance. For the method (2), there are cases where ceramic ball bearings are used in actual product applications, which have good results. However, ceramic ball bearings are very expensive and difficult to apply on a large scale, especially in some applications with high cost requirements. For the method (3), a variety of invention technologies for reducing the shaft voltage are proposed. Among them, an invention patent CN101971460B proposes that an insulation layer is provided between the inner and outer sides of the rotor of the motor to increase the impedance of the rotor and greatly reduce the shaft voltage, which can decrease from tens of volts to less than ten volts, and as the thickness of the insulation layer increases, the shaft voltage gradually decreases. In practice, we can also see the application of this technology in some motor products. However, in some large-power plastic-packaged DC motors, the shaft voltage is not improved instead the shaft voltage will increase, resulting in an increase in the risk of electrical corrosion of the bearing.

DE 10 2007 019828 B3 relates generally to a tapping device comprising a brush holder, which is made of electrically conductive material and can be connected to a base body of an electric machine. The tapping device further comprises a brush, which is made of electrically conductive material. JP 2013 078251 A1 relates generally to a molded motor comprising a stator with a stator winding wound onto a stator iron core; a shaft passing through the center of the motor; a rotor integrally formed with the shaft and freely rotated at the inner peripheral side of the stator; a bearing used for supporting the shaft; and a bracket finished product used for fixing the bearing. JP 2014 039420 A relates generally to a motor including a stator forming a coil by being wound around an iron core constructed of a plurality of teeth; a rotor in which magnets arranged in an outer periphery of a shaft are integrated by resin parts and a rolling bearing are provided at both ends in an axial direction of the shaft, respectively; and a bracket which supports one rolling bearing of the rotor.

### TECHNICAL PROBLEM

One of the objects of embodiments of the present application is to provide a motor and an electrical equipment, in order to solve the technical problem of electrical corrosion of the large-power bearing.

### SUMMARY

Aspects of the invention are set out in the claims. In order to solve the technical problem above mentioned, according to the invention a motor is provided, which includes:
a stator, comprising a stator core provided with windings;
a rotor, rotatably mounted on the stator, the rotor includes a rotor core and a rotor shaft located at a center of the rotor core and connected to the rotor core;
a bearing, supporting the rotor shaft, and including a bearing inner ring and a bearing outer ring;
a bearing bracket, including a bearing support portion made of conductive material and configured for fixing and conducting the bearing outer ring; at least one bearing bracket further includes a stator bracket portion made of conductive material and configured for connection to the stator, the stator bracket portion is located on the radially outer side of the bearing support portion, and a bracket insulation layer is provided between the bearing support portion and the stator bracket portion;
an electrode structure, configured for adjusting an equivalent capacitance between the bearing inner ring and the bearing outer ring; wherein the electrode structure is electrically connected with the bearing bracket and an adjustment capacitance is formed between the electrode structure and the rotor shaft; or the electrode structure is electrically connected with the rotor shaft, and an adjustment capacitance is formed between the electrode structure and the bearing bracket;
wherein two bearings are provided, and the two bearings are arranged on both sides of the rotor core at intervals along an axial direction of the rotor core, and each of the bearings is connected to one bearing bracket, wherein the bearing support portions of the two bearing brackets are electrically connected by a conductive member and the conductive member is insulated from the stator bracket portion.

In an embodiment of the invention, an electrical equipment is provided, which includes the motor above mentioned.

### BENEFICIAL EFFECTS

The beneficial effects of the motor and the electrical equipment provided by the embodiments of the present invention are as follows:
The traditional integrated bearing bracket is separated into the stator bracket portion and the bearing support portion, and the bracket insulation layer is provided between the stator bracket portion and the bearing support portion, which is equivalent to adding an insulation layer capacitance C1 between the stator bracket portion and the bearing support portion. The capacitance Cd between the bearing outer ring and the stator core is decomposed into the equivalent capacitance Cd2 after the capacitance C1 between the bearing support portion and the stator bracket portion and the capacitance C2 between the stator bracket portion and the stator core are connected in series, and then in parallel with the capacitance Cd1 between the bearing support portion and the stator core.

The arrangement of the bracket insulation layer can make the capacitance C1 much smaller than C2 and Cd2 smaller than C1 on the one hand; on the other hand, the bearing support portion of the bearing bracket can have no or reduce the area directly facing the stator core in the axial direction of the motor, and be far away from the stator core, that is, the value of the capacitance Cd1 can also be small. Therefore, the equivalent capacitance Cd of the stator side can be greatly reduced.

In the loop of the high-frequency circuit, there is also a capacitance Cb between the bearing outer ring and the bearing inner ring. The shaft voltage is the divided voltage between the two ends of the capacitance Cb. The capacitance Cd is equivalent to being connected in series on the outer ring side of the bearing of the capacitance Cb. Therefore, the capacitance Cd is reduced through the arrangement of the bracket insulation layer, so that the two ends of the capacitance Cb obtain a smaller divided voltage, that is, the shaft voltage is reduced, and the risk of electric corrosion of the bearing is effectively reduced. For motors with larger power and larger metal shells to increase the installation strength and ensure heat dissipation, the risk of electrical corrosion damage to the motor bearings can also be reduced.

The electrode structure is used to adjust the equivalent capacitance Cb between the bearing inner ring and the bearing outer ring, the electrode structure is electrically connected to the bearing bracket and forms an adjustment capacitance C3 with the rotor shaft; or the electrode structure is electrically connected to the rotor shaft and forms an adjustment capacitance C3 with the bearing bracket.

The adjustment capacitance C3 is connected in parallel with the bearing capacitances Cb1 and Cb2 to increase the equivalent capacitance Cb and reduce the voltage difference between the two ends of the equivalent capacitance Cb. On the one hand, the parallel connection of the adjustment capacitance C3 will increase the equivalent capacitance Cb, and make the equivalent capacitance Cb to obtain a smaller divided voltage, that is, the voltage difference between the bearing inner ring and the bearing outer ring is reduced, and the shaft voltage is reduced; on the other hand, when the adjustment capacitance C3 is relatively large relative to the bearing capacitances Cb1 and Cb2, the current between the bearing bracket and the rotor shaft will pass through the branch of the adjustment capacitance C3 to shunt the shaft current, thereby reducing the current flowing through the bearing outer ring and bearing inner ring, that is the shaft current. Therefore, the risk of electrical corrosion damage to the bearing can be greatly reduced.

The motor and the electrical equipment having the motor can effectively reduce the motor shaft voltage, thereby reducing the risk of electrical corrosion damage to the motor bearing and improving the reliability of the motor.

### BRIEF DESCRIPTION OF THE DRAWINGS

In order to explain the embodiments of the present application, i.e. present invention, more clearly, a brief introduction regarding the accompanying drawings that need to be used for describing the embodiments of the present application or the prior art is given below.
Fig. 1 is a partial cross-sectional view of a motor provided by an embodiment of the present application;
Fig. 2 is a schematic structural view of a bearing support portion and the stator bracket portion applied in the motor of Fig. 1;
Fig.3 is a schematic structural view of a bearing bracket formed after a bracket insulation layer is provided between the bearing support portion and the stator bracket portion of Fig. 2;
Fig. 4 is a cross-sectional view of the bearing bracket of Fig. 3 along a line B-B;
Fig. 5 is a three-dimensional assembly view of the motor of Fig. 1;
Fig. 6 is a schematic view of the assembly of a motor and an electrical equipment bracket of Fig. 5;
Fig. 7 is a schematic structural view of a conductive member applied in the motor of Fig. 5;
Fig. 8 is a schematic view of the assembly of the conductive member connected to the bearing support portion of Fig. 5;
Fig. 9 is a partial cross-sectional view of a motor provided by another embodiment of the present application;
Fig. 10 is a partial enlarged view of the motor of Fig. 9;
Fig. 11 is a three-dimensional structure view of an electrode structure applied in the motor of Fig. 9;
Fig. 12 is a partial cross-sectional view of a motor provided by another embodiment of the present application;
Fig. 13 is a cross-sectional view of a capacitance adjuster applied in the motor of Fig. 12; and
Fig. 14 is a partial cross-sectional view of a motor provided by the exemplary technology.

### DETAILED DESCRIPTION

In order to make the purpose, the technical solution and the advantages of the present application, i.e. invention, be clearer and more understandable, the present application will be further described in detail below with reference to accompanying figures and embodiments. It should be understood that the specific embodiments described herein are merely intended to illustrate but not to limit the present invention. All the embodiments referred to as embodiments of the present application mentioned in the detailed description are in the scope of present invention.

In the description of the present application, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present application, "a plurality of" means two or more, unless there is additional explicit and specific limitation.

In the present application, unless there is additional explicit stipulation and limitation, terms such as "mount", "connect with each other", "connect", "fix", and so on should be generally interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

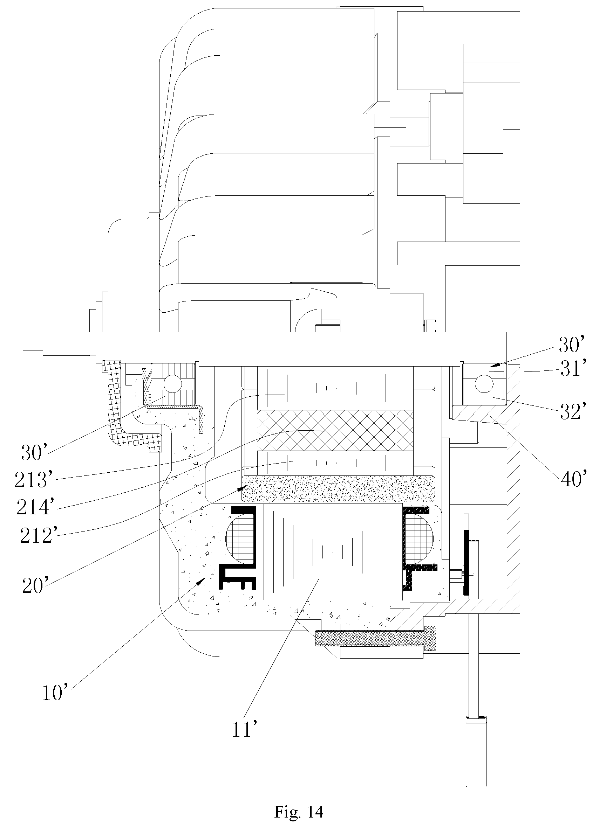

Referring to Fig. 14, an exemplary plastic-packaged DC motor with larger power has a large motor power, a large torque, and a high temperature rise. In order to ensure the installation strength of the motor and the electrical equipment using the motor, and to ensure the heat dissipation of the motor, it is generally used at least one larger metal shell as the bearing bracket 40' on one side of the motor. The bearing bracket 40' is connected to and supports the plastic-packaged stator 10' of the motor, and is fixedly connected to the mounting bracket of the electrical equipment, and is also connected to and supports a bearing outer ring 32' on one side of the bearing 30' of the motor. For the motor with the above solution, if an insulation layer is provided between the inner and outer sides of the rotor corresponding to the patent CN101971460B, the shaft voltage will not be improved instead the shaft voltage will increase, and resulting in the risk of electrical corrosion of the bearing increasing. The applicant discovered the specific reasons as follows:
This kind of motor uses an insulated rotor 20', which is rotatably mounted on the stator 10'. Since a rotor insulation layer 214' is provided between the inner core 213' and the outer core 212' of the rotor, which is equivalent to adding a Cz3 between the inner core 213' of the rotor and the outer core 212' of the rotor, and for the rotor-side capacitive coupling loop from the bearing inner ring 31' to the stator core 11', the magnet capacitance Cz2 and the air gap capacitance Cz1 between the stator 10' and the rotor 20' are further provided, the capacitances Cz1, Cz2, and Cz3 are connected in series, and the equivalent capacitance is arranged to be Cz. In general, the capacitance of the rotor insulation layer capacitance Cz3 is small, generally tens of PF, so the equivalent capacitance Cz is also small.

Compared with the equivalent capacitance Cd between the bearing outer ring 32' and the stator core 11', the bearing bracket 40' electrically connected to the bearing outer ring 32' of the above-mentioned motor has a larger area and is provided with a portion directly close to the stator core 11' in the axial or radial direction, or due to the metal bracket in the electrical equipment electrically connected to the bearing bracket 40' is provided with a portion close to the stator core 11', such that the capacitance Cd between the bearing outer ring 32' electrically connected to the bearing bracket 40' and the stator core 11' is relatively large, generally several hundred PF or more.

Since ends of the capacitance Cd on the stator side and the capacitance Cz on the rotor side are connected to the stator core 11', and the other ends are connected to the bearing outer ring 32' and the bearing inner ring 31', the capacitance difference between Cd and Cz will cause the voltage difference between the bearing outer ring 32' and the bearing inner ring 31' larger, that is, the shaft voltage is too large, thereby increasing the risk of electric corrosion of the bearing 30'.

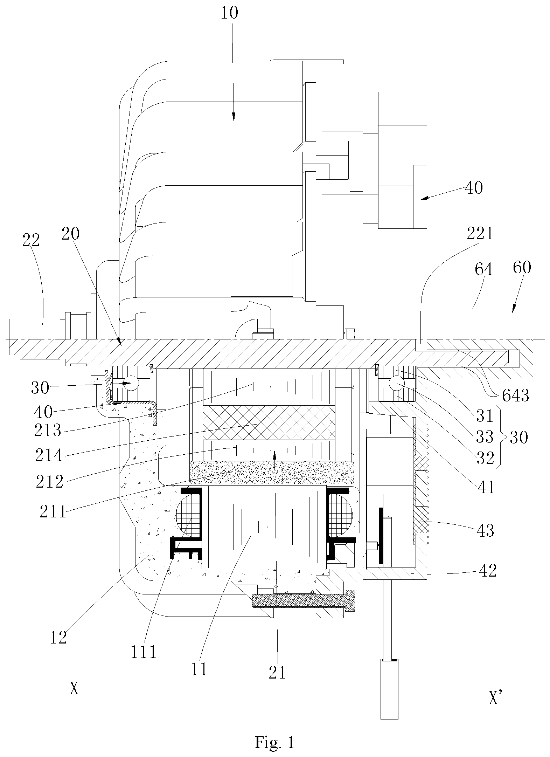

Referring to Figs. 1, 9, and 12, the present invention provides a motor, which includes a stator 10, a rotor 20, a bearing 30, a bearing bracket 40, and an electrode structure 60. The stator 10 includes a stator core 11 having windings 111. The rotor 20 is rotatably mounted on the stator 10. The rotor 20 includes a rotor core 21 and a rotor shaft 22 located at the center of the rotor core 21 and connected to the rotor core 21. The rotor core 21 may include a permanent magnet 211. The rotor core 21 rotates synchronously with the rotor shaft 22.

The bearing 30 is configured to support the rotor shaft 22 so that the rotor shaft 22 can rotate freely. The bearing 30 includes a bearing inner ring 31 and a bearing outer ring 32. The bearing inner ring 31 is sleeved on the outer peripheral surface of the rotor shaft 22 and is confined on the rotor shaft 22 along the axial direction of the rotor shaft 22, and the bearing inner ring 31 is in conduction with the rotor shaft 22. The bearing outer ring 32 is mounted on the bearing bracket 40 and is confined on the bearing bracket 40 in the radial and axial directions. Rollers 33 are provided between the bearing outer ring 32 and the bearing inner ring 31 so that the bearing outer ring 32 and the bearing inner ring 31 can rotate freely.

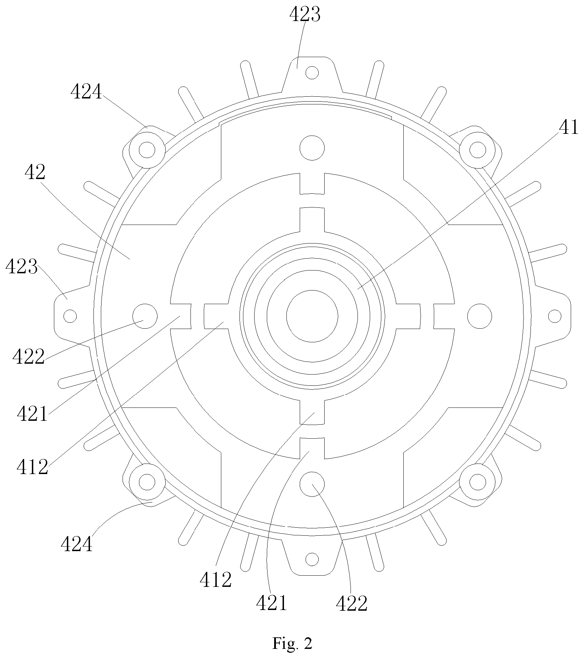

Referring to Figs. 2 to 4 together, the bearing bracket 40 includes a bearing support portion 41 made of conductive material and configured for fixing and conducting the bearing outer ring 32; at least one bearing bracket 40 also includes a stator bracket portion 42 made of conductive material and configured for connection to the stator 10, the stator bracket portion 42 is located on the radially outer side of the bearing support portion 41. A bracket insulation layer 43 is provided between the bearing support portion 41 and the stator bracket portion 42 so that the stator bracket portion 42 and the bearing support portion 41 insulation.

The traditional integrated bearing bracket is separated into the stator bracket portion 42 and the bearing support portion 41, and the bracket insulation layer 43 is provided between the stator bracket portion 42 and the bearing support portion 41, which is equivalent to adding an insulation layer capacitance C1 between the stator bracket portion 42 and the bearing support portion 41. The capacitance Cd between the bearing outer ring 32 and the stator core 11 is decomposed into the equivalent capacitance Cd2 after the capacitance C1 between the bearing support portion 41 and the stator bracket portion 42 and the capacitance C2 between the stator bracket portion 42 and the stator core 11 are connected in series, and then in parallel with the capacitance Cd1 between the bearing support portion 41 and the stator core 11.

The arrangement of the bracket insulation layer 43 can make the capacitance C1 much smaller than C2 and Cd2 smaller than C1 on the one hand; on the other hand, the bearing support portion 41 of the bearing bracket 40 can have no or reduce the area directly facing the stator core 11 in the axial direction of the motor, and be far away from the stator core 11, that is, the value of the capacitance Cd1 can also be small. Therefore, the equivalent capacitance Cd of the stator side can be greatly reduced.

In the loop of the high-frequency circuit, there is also a capacitance Cb between the bearing outer ring 32 and the bearing inner ring 31. The shaft voltage is the divided voltage between the two ends of the capacitance Cb. The capacitance Cd is equivalent to being connected in series on the outer ring side of the bearing of the capacitance Cb. Therefore, the capacitance Cd is reduced through the arrangement of the bracket insulation layer 43, such that it is balanced with the smaller capacitance Cz connected in series on the inner ring side of the bearing, so that the two ends of the capacitance Cb obtain a smaller divided voltage, that is, the shaft voltage is reduced, and the risk of electric corrosion of the bearing is effectively reduced. For motors with larger power and larger metal shells to increase the installation strength and ensure heat dissipation, the risk of electrical corrosion damage to the motor bearings 30 can also be reduced.

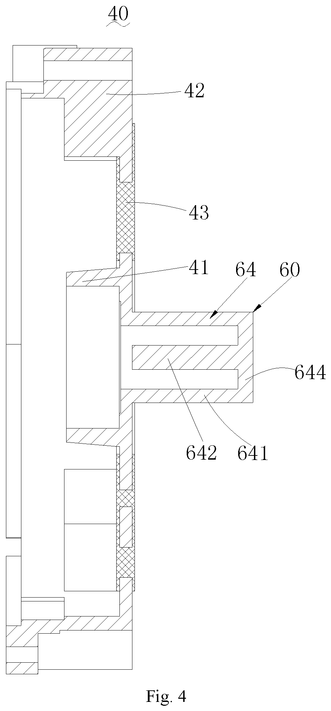

The motor further includes an electrode structure 30 used to adjust the equivalent capacitance Cb between the bearing inner ring 31 and the bearing outer ring 32, which includes two solutions. Referring to Figs 1 and 4, a first solution is that the electrode structure 30 is electrically connected to the bearing bracket 40, which is equivalent to adding a conductive electrode plate at a position close to the rotor shaft 22, and an adjustment capacitance C3 is formed between the electrode plate and the rotor shaft 22, and the electrode structure (i.e. the electrode plate) is electrically connected to the bearing bracket 40, which can be regarded that the bearing inner ring 31 is extended by the rotor shaft 22, and the bearing outer ring 32 is extended by the electrode structure 50, the two extended portions are respectively provided with an area facing each other and are non-conducting, hereby forming the adjustment capacitance C3, which is equivalent to the above adjustment capacitance C3 being connected in parallel between the bearing outer ring 32 and the bearing inner ring 31.

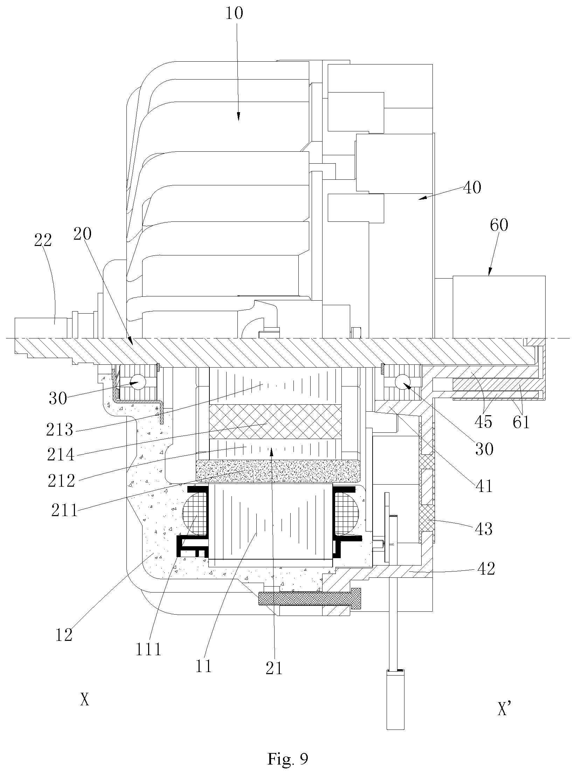

Referring to Figs. 9 to 13, the second solution is that the electrode structure 60 is electrically connected to the rotor shaft 22, which is equivalent to adding a conductive electrode plate that has an equal potential with the rotor shaft 22 on the rotor shaft 22. The bearing bracket 40 and the electrode structure 60 are spaced apart, and the bearing bracket 40 is electrically connected to the bearing outer ring 32, which is equivalent to adding an electrode plate that has an equal potential with the bearing outer ring 32 on the bearing outer ring 32. An adjustment capacitance C3 is formed between the two electrode plates and the rotor shaft 22 is electrically connected to the bearing inner ring 31. Therefore, the adjustment capacitance C3 is equivalent to being connected in parallel between the bearing outer ring 32 and the bearing inner ring 31.

Among them, the electrical connection includes direct and indirect electrically conductive connection, and connection through a large capacitance. The connection through a large capacitance, such as a thin insulation layer is provided between two metal members. As long as the distance between the two metal parts is close enough and the facing area is large enough, the capacitance value between the two metal parts will be large enough.

For the above two solutions, if both ends of the rotor core 21 are respectively provided with one bearing 30, two bearings 30 are provided, and the high-frequency equivalent circuit between the bearing outer ring 32 and the bearing inner ring 31 of one bearing 30 can also be equivalent to a coupling capacitance Cb1. The high-frequency equivalent circuit between the bearing outer ring 32 and the bearing inner ring 31 of another bearing 30 can also be equivalent to a coupling capacitance Cb2. The shaft voltage is the divided voltage on Cb1 and Cb2.

Each bearing 30 is installed on a bearing bracket 40 respectively, and the bearing inner rings 31 of the two bearings are electrically connected to the rotor shaft 22. In order to simplify the analysis, the description is made based on the electrical connection of the two bearing brackets 40, and the above-mentioned capacitances Cb1 and Cb2 are equivalent to being connected in parallel. The arrangement of the above electrode structure 60 is equivalent to connecting the adjustment capacitance C3 in parallel with the bearing capacitances Cb1 and Cb2. The total capacitance of Cb1, Cb2, and C3 in parallel is the above-mentioned "equivalent capacitance". It can be understood that when the two bearing brackets 40 (or bearing outer ring 32) are not electrically connected, Cb1 or Cb2 and C3 are connected in parallel, and the total capacitance of the two in parallel is the above-mentioned "equivalent capacitance". The above-mentioned Cb1 and Cb2 are respectively the bearing capacitances of the corresponding bearings, which is related to the facing areas of the bearing inner ring and the bearing outer ring. For a given bearing, the bearing capacitance is also determined. The equivalent capacitance is denoted as Cb, by adjusting the facing area between the electrode structure 60 and the rotor shaft 22 (the first solution) or the electrode structure 60 and the bearing bracket 40 (the second solution) and the size of the air gap between the electrode structure 60 and the rotor shaft 22, or the electrode structure 60 and the bearing bracket 40, which can effectively change the amount of the adjustment capacitance C3 and the amount of the equivalent capacitance Cb. For the convenience of description, assuming that the capacitance formed by the bearing outer ring 32 through the bearing bracket 40 and the stator core 11 is Cd, and the equivalent capacitance formed between the bearing inner ring 31 and the stator core 11 through the air gaps of the rotor shaft 22, the permanent magnet 211, the stator 10, and the rotor 20 is Cz. The coupling capacitance loop formed by the entire motor includes the above-mentioned equivalent capacitances Cb, Cd, and Cz.

The adjustment capacitance C3 is connected in parallel with the bearing capacitances Cb1 and Cb2 to increase the equivalent capacitance Cb and reduce the voltage difference between the two ends of the equivalent capacitance Cb. On the one hand, the parallel connection of the adjustment capacitance C3 will increase the equivalent capacitance Cb, such that the equivalent capacitance Cb obtain a smaller divided voltage, that is, the voltage difference between the bearing inner ring 31 and the bearing outer ring 32 is reduced, and the decreased shaft voltage is realized. On the other hand, when the adjustment capacitance C3 is relatively large relative to the bearing capacitances Cb1 and Cb2, the current between the bearing bracket 40 and the rotor shaft 22 will pass through the branch of the adjustment capacitance C3 to shunt the shaft current, thereby reducing the current flowing through the bearing outer ring 32 and the bearing inner ring 31, that is, the shaft current, and therefore, the risk of electrical corrosion damage to the bearing 30 can be greatly reduced.

The motor and the electrical equipment having the motor can effectively reduce the motor shaft voltage, thereby reducing the risk of electrical corrosion damage to the motor bearing 30 and improving the reliability of the motor.

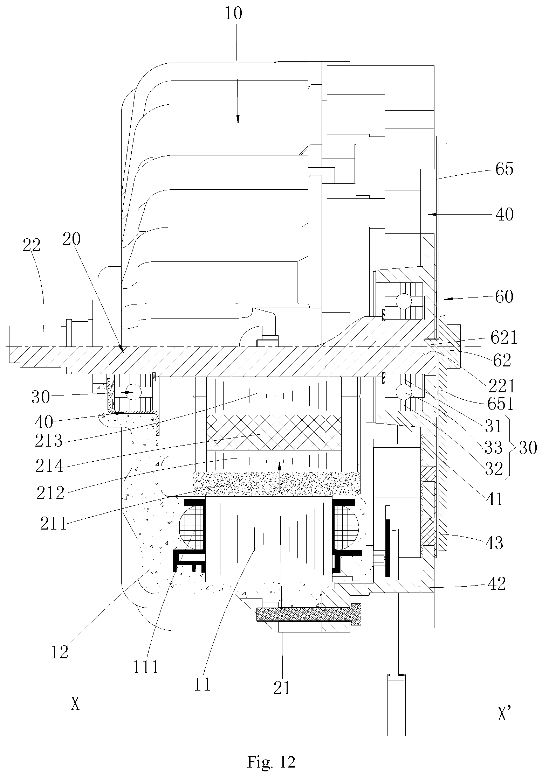

Referring to Fig. 1, according to the invention, the bearings 30 are provided with two, and two bearings 30 are arranged on both sides of the rotor core 21 at intervals along the axial direction of the rotor core 21, and each bearing 30 is provided with a bearing bracket 40. The two sets of bearings 30 are arranged at intervals, and are located at positions sandwiching the rotor core 21 in the axial direction, and support the rotor shaft 22 to freely rotate. The two sets of bearings 30 are respectively mounted on two bearing brackets 40. The bearing bracket 40 on the shaft extension side X and the outside of the stator core 11 are plastic-packaged and molded into a plastic shell 12, and the bearing bracket 40 on the non-shaft extension side X' is mounted on the plastic shell 12. The motors shown in Figs. 9 and 12 are two other embodiments in which two bearings 30 and two bearing brackets 40 are arranged.

Referring to Figs. 1 and 5 to Fig. 8. According to the invention, the bearing support portions 41 of the two bearing brackets 40 are electrically connected by a conductive member 50, and the conductive member 50 is insulated from the stator bracket portion 42, which is equivalent to electrically connecting the two bearing outer rings 32, and the two bearing inner rings 31 are electrically connected through the rotor shaft 22. Therefore, the above adjustment effect will affect the shaft voltages of the two bearings 30 at the same time, thereby the effect of the risk of electric corrosion of the two bearings 30 are reduced at the same time.

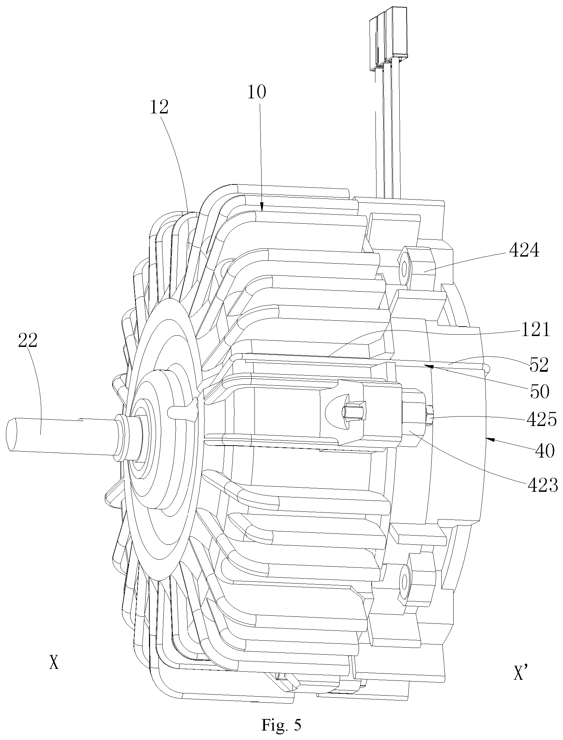

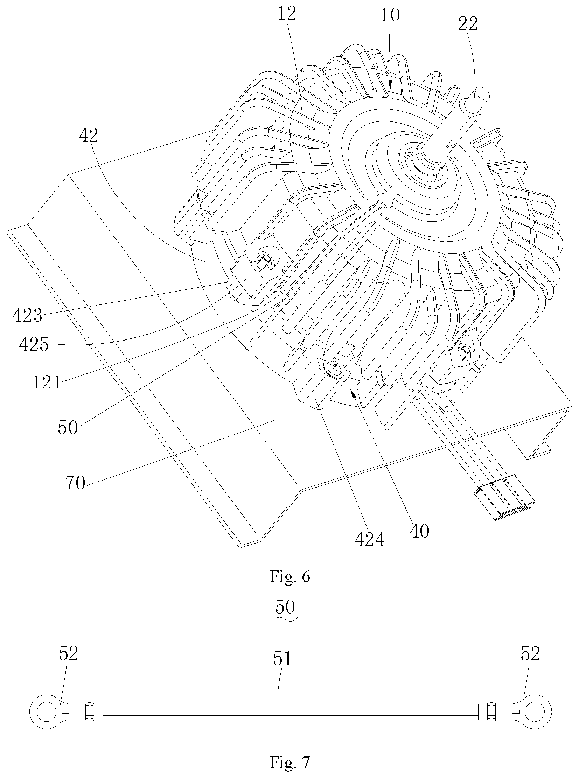

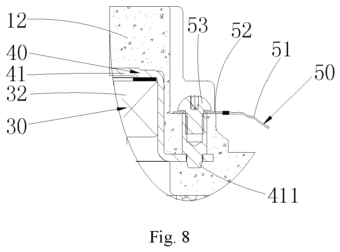

In this embodiment, referring to Figs. 7 and 8, the conductive member 50 includes two terminals 51 arranged at intervals and a power cord 52 connected between the two terminals 51 and an outer surface of the power cord 52 is an insulation portion. The two terminals 51 can be respectively connected to the bearing support portions 41 of the two bearing brackets 40, so that the two bearing brackets 40 are conducted, and the power cord 52 has a compact structure and is easy to be assembled. Referring to Fig. 5 at the same time, specifically, the two bearing brackets 40 are respectively located on the shaft extension side X and the non-shaft extension side X'. A part of the power cord 52 is arranged on the outer circumferential surface of the plastic shell 12 along the axial direction of the stator 10, and the other part of the power cord 52 is arranged on one end surface of the plastic shell 12 along the radial direction of the stator 10. The bearing bracket 40 on the shaft extension side X covers the other end surface of the stator core 11. The overall structure occupies a small space.

In the embodiment, referring to Fig. 8, the bearing support portion 41 of each bearing bracket 40 is provided with a connecting hole 411, and the two terminals 51 are electrically connected to the two connecting holes 411 in a one-to-one correspondence. The terminals 51 of the power cord 52 abuts against the connection holes 411, and the terminals 51 are fixed to the bearing support 41 by fasteners 53. This solution is easy to be assembled and has a compact structure, the two bearing brackets 40 are conducted, and then the two bearing outer rings 32 are conducted.

Referring to Figs. 1 and 6, in another embodiment of the present application, one of the bearing brackets 40 and the stator core 11 are integrally molded with a plastic shell 12, so that the bearing bracket 40 is insulated from the stator core 11. Specifically, the plastic shell 12 may be formed by molding with a resin material. The outer surface of the plastic shell 12 of the stator 10 is provided with a mounting groove 121 for mounting the power cord 52. During assembly, the power cord 52 is mounted in the mounting groove 121 to facilitate the assembly of the power cord 52.

Referring to Fig. 1 and Fig. 4. In another embodiment of the present application, the stator bracket portion 42 is a metal member for forming a capacitance. Specifically, the stator bracket portion 42 can be made of aluminum or other metal materials, which is easy to be stamped and stretched.

Referring to Figs. 2 to 4, in another embodiment of the present application, for the bearing bracket 40 with the bracket insulation layer 43, the bracket insulation layer 43 is injection molded through the region between the stator bracket portion 42 and the bearing support portion 41. The bracket insulation layer 43 is injection-molded between the stator bracket portion 42 and the bearing support portion 41 such that the bearing bracket 40 as a whole and to insulate the stator bracket portion 42 and the bearing support portion 41 from each other. The bracket insulation layer 43 can be made of thermosetting material, which has good insulation properties. Specifically, the material of the insulation layer is Bulk Molding Compound (BMC) or polybutylene terephthalate (PBT) or other insulation materials, which is arranged as required.

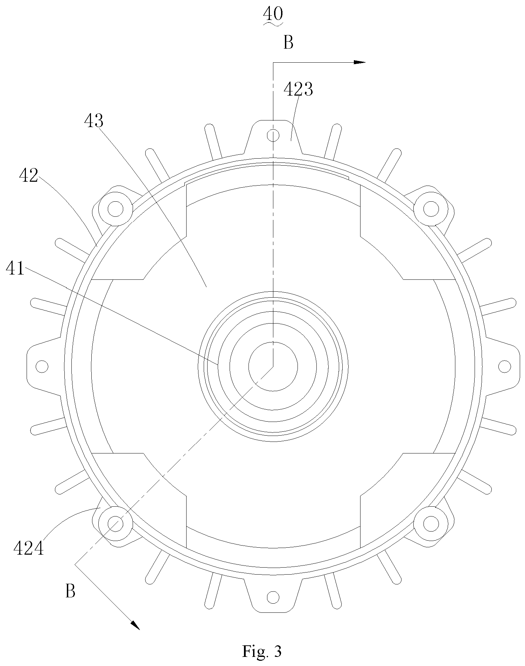

Referring to Figs. 2 and 3, in another embodiment of the present application, the stator bracket portion 42 is provided with a plurality of first arm portions 421 extending radially inwardly of the bearing bracket 40; the bearing support portion 41 is provided with a plurality of second arm portions 412 extending radially outwardly of the bearing bracket 40; the first arm portions 421 and the second arm portions 412 are embedded in the bracket insulation layer 43. The first arm portion 421 and the second arm portion 412 are provided to extend the first arm portions 421 and the second arm portions 412 into the bracket insulation layer 43 when the bracket insulation layer 43 is injection molded, so that the bracket insulation layer 43 is more firmly combined with the stator bracket portion 42 and the bearing support portion 41, and at the same time, the first arm portions 421 and the second arm portions 412 can improve the structural strength of the region of the bracket insulation layer 43.

In the embodiment, the first arm portions 421 and the second arm portions 412 are arranged in pairs, and are at least partially opposite to each other in the radial direction of the motor. This solution can better enable the bracket insulation layer 43 to be more firmly combined with the stator bracket portion 42 and the bearing support portion 41, and at the same time can improve the structural strength of the region of the bracket insulation layer 43.

Referring to Figs. 2 and 3, in another embodiment of the present application, the stator bracket portion 42 is provided with a plurality of first through holes 422 extending in the axial direction of the bearing bracket 40, and the first through holes 422 are at least partially buried in the bracket insulation layer 43; the bearing support portion 41 is provided with a plurality of second through holes extending along the axial direction of the bearing bracket 40, and the second through holes are at least partially buried in the bracket insulation layer 43. The first through holes 422 and the second through holes are provided for the purpose of injecting the insulating material into the first through hole 422 and the second through hole when the bracket insulation layer 43 is injection molded, thereby increasing the contact area of the bracket insulation layer 43 and the stator bracket portion 42, and the bearing support portion 41 allows the bracket insulation layer 43 to be more firmly combined with the stator bracket portion 42 and the bearing support portion 41.

Referring to Figs. 3, 4, and 6, in another embodiment of the present application, the stator bracket portion 42 is provided with a first fixing portion 423, and the first fixing portion 423 is connected to the plastic shell 12 to realize the bearing bracket 40 having the stator bracket portion 42 being assembled on the plastic shell 12. In the embodiment, the bearing bracket 40 can be connected to the plastic shell 12 by screws 425, which is easy to be assembled.

In another embodiment of the present application, the stator bracket portion 42 is provided with a second fixing portion 424, and the second fixing portion 424 is connected to the bracket 70 of the electrical equipment using the motor to realize the fixing of the motor. The bracket 70 is made of metal, and the second fixing portion 424 is electrically connected to the bracket 70. Specifically, the second fixing portion 424 and the bracket 70 are electrically connected by a power cord. The bracket 70 is electrically connected with the power ground of the electrical equipment or with the earth. The bracket insulation layer 43 is provided to reduce the stator side capacitance Cd, so that the two ends of the bearing capacitance Cb connected in series with the Cd obtain a smaller divided voltage, that is, the shaft voltage is reduced; and the effect of the bracket 70 of the electrical equipment connected to the stator bracket portion 42 on the shaft voltage is weakened.

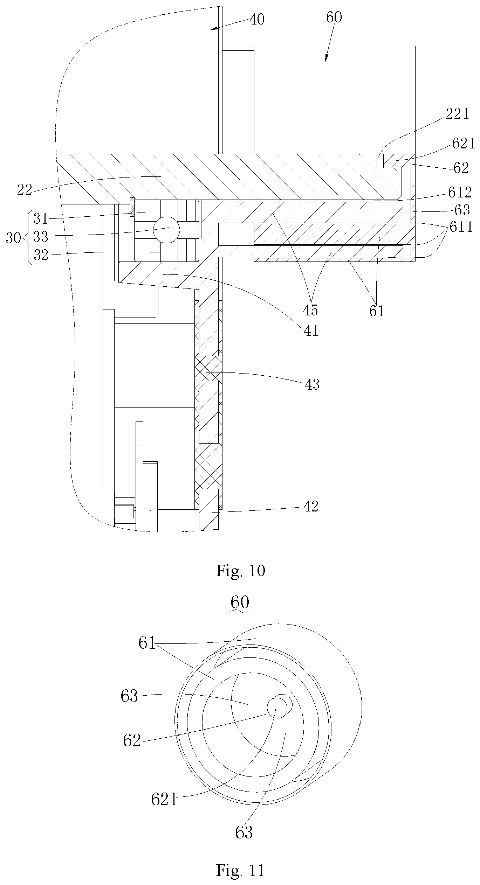

Referring to Fig. 1, in another embodiment of the present application, the rotor 20 of the motor uses an insulated rotor 20 structure, that is, a rotor insulation layer 214 is provided between the rotor shaft 22 and the outer peripheral surface of the rotor core 21. For example, the rotor insulation layer 214 is provided between the outer core 212 of the rotor 20 and the inner core 213 of the rotor 20. As before, this solution can make the equivalent capacitance Cz of the rotor side connected to the bearing inner ring 31 smaller. In this case, by providing the bracket insulation layer 43 between the stator bracket portion 42 and the bearing support portion 41 of the bearing bracket 40, the value of the capacitance Cd can be reduced. By adjusting the facing areas and distance between the bearing support portion 41 and the stator bracket portion 42, and by means of adjusting the dielectric constant of the material of the bracket insulation layer 43 can change the value of the capacitance C1, thereby changing the value of the capacitance Cd. Specifically, the rotor insulation layer 214 may be made of PBT or rubber. The motors shown in Fig. 9 and Fig. 11 are two other similar embodiments.

In the embodiment, when the equivalent capacitance Cd between the bearing outer ring 32 and the stator core 11 is reduced to match (approximately) the equivalent capacitance Cz between the bearing inner ring 31 and the stator core 11, the potentials of the bearing outer ring 32 and the bearing inner ring 31 are close, which can greatly reduce the voltage difference between the bearing outer ring 32 and the bearing inner ring 31, that is, reduce the shaft voltage, thereby effectively reducing the risk of electric corrosion of the bearing 30.

Referring to Figs. 1 and 4, in another embodiment of the present application, the electrode structure includes a sleeve portion 64 disposed on the bearing support portion 41 of at least one bearing bracket 40, the sleeve portion 64 and the bearing support portion 41 are electrically connected to each other, and a first air gap 643 extending along the radial direction of the rotor shaft 22 is formed between the sleeve portion 64 and the rotor shaft 22. With reference to the previous analysis of the first solution, it is equivalent to adding an adjustment capacitance C3 between the rotor shaft 22 and the bearing support portion 41. The coupling capacitance loop formed by the entire motor includes the above-mentioned equivalent capacitances Cb, Cd, and Cz. Therefore, the arrangement of the sleeve portion 64, on the one hand, can increase the equivalent capacitance Cb, so that both ends (that is, the bearing outer ring 32 and the bearing inner ring 31) of the equivalent capacitance Cb are in the circuit formed by the stator side capacitance Cd connected in series with the equivalent capacitance Cb, a smaller divided voltage divider is obtained, that is, a smaller shaft voltage; on the other hand, the current between the bearing bracket 40 and the rotor shaft 22 will pass through the branch of the above-mentioned adjustment capacitance C3 to shunt the shaft current, thereby reducing the current flowing through the bearing outer ring 32 and the bearing inner ring 31, that is the shaft current. Therefore, the risk of electrical corrosion damage to the bearing 30 can be greatly reduced.

In another embodiment of the present application, one end of the rotor shaft 22 in the axial direction is provided with a shaft hole 221 extending along the axial direction, and the sleeve portion 64 includes an outer sleeve 641 located outside the outer peripheral surface of the rotor shaft 22 and an inner sleeve 642 extending in the shaft hole 221, and the inner sleeve 642 is located inside the outer sleeve 641. By arranging the outer sleeve 641 sleeved on the rotor shaft 22 and an inner sleeve 642 extending into the rotor shaft 22, the facing area of the sleeve portion 64 to the rotor shaft 22 can be increased to increase the adjustment capacitance C3. The adjustment capacitance C3 is formed between the sleeve portion 64 and the rotor shaft 22, and the adjustment capacitance C3 is connected in parallel with the bearing capacitances Cb1 and Cb2. On the one hand, the shaft voltage between the bearing outer ring 32 and the bearing inner ring 31 can be reduced; on the other hand, the shaft current can be shunted. The current between the bearing bracket 40 and the rotor shaft 22 is shunted from the branch of the above-mentioned adjustment capacitance C3, which effectively reduce the shaft current flowing through the bearing outer ring 32 and the bearing inner ring 31. Specifically, a closing plate 644 is connected to the same end surface of the outer sleeve 641 and the inner sleeve 642. The closing plate 644 can prevent foreign matter from entering the shaft hole 221 and the inside of the motor, so as to ensure the reliable operation of the shaft sleeve portion 64.

In another embodiment of the present application, the cross-sectional shape of the first air gap 643 in the radial direction is in a circular ring shape concentric with the rotor shaft 22. The adjustment capacitance C3 of a predetermined value is formed between the rotor shaft 22 and the sleeve portion 64, and the adjustment capacitance C3 is connected in parallel with the bearing capacitances Cb1 and Cb2.

In another embodiment of the present application, the distance in the radial direction of the first air gap 643 is less than or equal to 0.3 mm, such that the value of the adjustment capacitance C3 is relatively large, so as to increase the equivalent capacitance Cb, so that the divided voltage obtained at two ends of the equivalent capacitance Cb are smaller, hat is, the voltage difference between the bearing inner ring 31 and the bearing outer ring 32 is reduced, and the shaft voltage is reduced. At the same time, the adjustment capacitance C3 is arranged to be larger than the bearing capacitances Cb1 and Cb2, so that the electricity at both ends of the equivalent capacitance Cb can be more concentrated on both ends of the adjustment capacitance C3, which is equivalent to concentrated on the sleeve portion 64 and the rotor shaft 22 close to the sleeve portion 64 to reduce the shaft current.

In another embodiment of the present application, the sleeve portion 64 and the bearing support portion 41 are metal members integrally formed, and the integral forming process, such as stamping and stretching, is adopted for easy processing. Specifically, the sleeve portion 64 and the bearing support portion 41 may be aluminum members or other metal members, which can realize electric conduction and are easy to be press-formed.

Referring to Fig. 9 and Fig. 12. In another embodiment of the present application, the electrode structure 60 is disposed on the rotor shaft 22, which is easy to be assembled. The adjustment capacitance C3 is formed between the electrode structure 60 and the bearing bracket 40, and the rotor shaft 22 is electrically connected to the bearing inner ring 31. Therefore, the adjustment capacitance C3 is equivalent to being connected in parallel between the bearing outer ring 32 and the bearing inner ring 31. With reference to the previous analysis of the second solution, the coupling capacitance loop formed by the entire motor includes the above-mentioned equivalent capacitances Cb, Cd, and Cz. The adjustment capacitance C3 is connected in parallel with the bearing capacitances Cb1 and Cb2 to increase the equivalent capacitance Cb and reduce the voltage difference between the two ends of the equivalent capacitance Cb. On the one hand, the parallel connection of the adjustment capacitance C3 will increase the equivalent capacitance Cb, such that the equivalent capacitance Cb obtains a smaller divided voltage in the equivalent loop of the equivalent capacitance Cd in series with the bearing outer ring 32 and the equivalent capacitance Cz in series with the bearing inner ring 31, that is the voltage difference between the bearing inner ring 31 and the bearing outer ring 32 is reduced to reduce the shaft voltage; on the other hand, the current between the bearing bracket 40 and the rotor shaft 22 will flow through the branch of the above-mentioned adjusting capacitor C3 to shunt the shaft current, thereby reducing the current flowing through the bearing outer ring 32 and the bearing inner ring 31, that is, the shaft current. Therefore, the risk of electrical corrosion damage to the bearing 30 can be greatly reduced.

Referring to Figs. 9 to 11, in another embodiment of the present application, the electrode structure 60 includes a plurality of first conductive cylinders 61 that are sequentially sleeved and arranged at intervals. The first conductive cylinders 61 are arranged around the rotor shaft 22 and are extended along the axis direction, the first conductive cylinders 61 are electrically connected to the rotor shaft 22, which is equivalent to adding a conductive electrode plate with the same potential as the rotor shaft 22 on the rotor shaft 22. A plurality of second conductive cylinders 45 are provided on the bearing support portion 41 of the bearing bracket 40 close to the electrode structure 60. The second conductive cylinders 45 are arranged around the rotor shaft 22 and are extended along the axial direction. The second conductive cylinders 45 are electrically connected to the bearing support portion 41; which is equivalent to adding an electrode plate with the same potential as the bearing outer ring 32 on the bearing outer ring 32. The first conductive cylinders 61 and the second conductive cylinders 45 are arranged opposite to each other in the radial direction of the motor, and the second air gap 611 extending along the axial direction of the rotor shaft 22 is formed between the first conductive cylinder 61 and the second conductive cylinder 45. An adjustment capacitance C3 is formed between the two electrode plates, and the rotor shaft 22 is electrically connected to the bearing inner ring 31. Therefore, the adjustment capacitance C3 is equivalent to being connected in parallel between the bearing outer ring 32 and the bearing inner ring 31. On the one hand, the shaft voltage between the bearing outer ring 32 and the bearing inner ring 31 can be reduced; on the other hand, the shaft current can be shunted, such that the current between the bearing bracket 40 and the rotor shaft 22 is shunted from the branch circuit of the adjustment capacitor C3, which effectively reduces the shaft voltage and shaft current flowing through the bearing outer ring 32 and the bearing inner ring 31. The solution of the first conductive cylinders 61 and the second conductive cylinders 45 facilitates the internal heat of the motor to pass through the air gap between the rotor shaft 22 and the innermost second conductive cylinder 45 and the air gap between the first conductive cylinder 61 and the second conductive cylinder 45 to be transmitted to the outside, which is conducive to the heat dissipation of the motor. In addition, the distance of the annular air gap can be different, which facilitates the processing of the first conductive cylinders 61 and the second conductive cylinders 45.

In the embodiment, a third air gap 612 extending along the axial direction of the rotor shaft 22 is formed between the second conductive cylinder 45 closest to the rotor shaft 22 among the second conductive cylinders 45 and outer peripheral surface of the rotor shaft 22. An adjustment capacitance of a predetermined value is formed between the innermost second conductive cylinder 45 and the rotor shaft 22, and the adjustment capacitance is connected in parallel with the bearing capacitances Cb1 and Cb2.

In the embodiment, the cross-sectional shapes of the second air gap 611 and the third air gap 612 in the radial direction is a circular ring shape concentric with the rotor shaft 22. The second air gap 611 and the third air gap 612 of circular ring shapes form an adjustment capacitance of a predetermined value, and the adjustment capacitance is connected in parallel with the bearing capacitances Cb1 and Cb2 to effectively reduce the shaft voltage and shaft current flowing through the bearing outer ring 32 and the bearing inner ring 31.

In the embodiment, the distance in the radial direction of the second air gap 611 is less than or equal to 0.3 mm; the distance in the radial direction of the third air gap 612 is less than or equal to 0.3 mm, which can allow the value of the adjustment capacitance C3 relatively large. The adjustment capacitance C3 is connected in parallel to the bearing capacitances Cb1 and Cb2 to increase the equivalent capacitance Cb, so that the two ends of the equivalent capacitance Cb obtain a smaller divided voltage, that is, the voltage difference between the bearing inner ring 31 and the bearing outer rings 32 is reduced, and the shaft voltage is reduced. At the same time, the adjustment capacitance C3 is arranged larger than the bearing capacitances Cb1 and Cb2, so that the electricity at both ends of the equivalent capacitance Cb can be more concentrated on both ends of the adjustment capacitance C3, which is equivalent to concentrated between the first conductive cylinder 61 and the second conductive cylinder 45 and between the innermost second conductive cylinder 45 and the rotor shaft 22 to reduce shaft current.

In another embodiment of the present application, the electrode structure 60 further includes a shaft mounting portion 62 and an end plate 63 connecting the shaft mounting portion 62 and the first conductive cylinders 61. The shaft mounting portion 62 is fixed on the rotor shaft 22 and is electrically connected to the rotor shaft 22. The structure of the shaft mounting portion 62, the end plate 63 and the first conductive cylinders 61 is easy to be assembled. The shaft mounting portion 62 is fixed to the rotor shaft 22 and is electrically connected to the rotor shaft 22. This solution is easy to be assembled and ensures that the first conductive cylinders 61 are electrically connected to the rotor shaft 22.

In the embodiment, the first conductive cylinders 61 are electrically connected to the shaft mounting portion 62 through the end plate 63, so that all the first conductive cylinders 61 are electrically connected to the rotor shaft 22 through the shaft mounting portion 62.

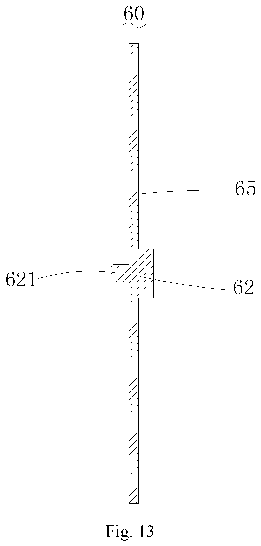

Referring to Figs. 12 and 13, in another embodiment of the present application, the electrode structure 60 includes a conductive electrode plate 65 connected to the rotor shaft 22 and extending radially along the rotor shaft 22, which is equivalent to adding a conductive electrode plate with the same potential as the rotor shaft 22 on the rotor shaft 22. The bearing bracket 40 close to the conductive electrode plate 65 is a metal member. The area of the bearing bracket 40 close to the conductive electrode plate 65 is equivalent to adding an electrode plate with the same potential as the bearing outer ring 32 on the bearing outer ring 32. A fourth air gap 651 is formed between the conductive electrode plate 65 and the bearing bracket 40. An adjustment capacitance C3 is formed between the two electrode plates, and the rotor shaft 22 is electrically connected to the bearing inner ring 31. Therefore, the adjustment capacitance C3 is equivalent to being connected in parallel between the bearing outer ring 32 and the bearing inner ring 31. On the one hand, the shaft voltage between the bearing outer ring 32 and the bearing inner ring 31 can be reduced; on the other hand, the shaft current can be shunted, such that the current between the bearing bracket 40 and the rotor shaft 22 is shunted from the branch of the above-mentioned adjustment capacitance C3, which effectively reduce the shaft current flowing through the bearing outer ring 32 and the bearing inner ring 31. The electrode structure 60 also includes a shaft mounting portion 62 for connecting with the rotor shaft 22.

In the embodiment, the distance in the axial direction of the fourth air gap 651 is less than or equal to 0.3 mm, such that the value of the adjustment capacitance C3 is relatively large. The adjustment capacitance C3 is connected in parallel to the bearing capacitances Cb1 and Cb2 to increase the equivalent capacitance Cb, so that the two ends of the equivalent capacitance Cb obtain a smaller divided voltage, that is, the voltage difference between the bearing inner ring 31 and the bearing outer rings 32 is reduced, and the shaft voltage is reduced. At the same time, the adjustment capacitance C3 is arranged larger than the bearing capacitances Cb1 and Cb2 can make the electricity at both ends of the equivalent capacitance Cb more concentrated on the two ends of the adjustment capacitance C3, which is equivalent to being concentrated on the bearing bracket 40 and the conductive electrode plate 65 to reduce the shaft current.

Referring to Figs.10, in another embodiment of the present application, the shaft mounting portion 62 is fixed at one end of the rotor shaft 22, the end of the rotor shaft 22 is provided with a shaft hole 221 along the axial direction, and the shaft mounting portion 62 includes a fixing post 621 disposed toward the side of the bearing bracket 40 and matched with the shaft hole 221, and the fixing post 621 is at least partially fixed to the shaft hole 221. After the fixing post 621 is fixed to the shaft hole 221, the first conductive cylinders 61 can be mounted on the rotor shaft 22 and electrically connected with the rotor shaft 22, which is convenient for assembly and disassembly. The motor shown in Fig. 12 is another embodiment in which the fixing post 621 and the shaft hole 221 are provided.

In another embodiment of the present application, the fixing post 621 is fixed to the shaft hole 221 by crimping. The crimping method assembly can tightly fix the fixing post 621 in the shaft hole 221, ensuring the reliability of the first conductive cylinders 61 connected to the rotor shaft 22 when the motor is working, and avoiding the first conductive cylinders 61 from detaching when the rotor shaft 22 rotates.

In another embodiment of the present application, the outer peripheral surface of the fixing post 621 is provided with an external thread, and the shaft hole 221 is provided with an internal thread that is threaded with the external thread. The first conductive cylinders 61 are fixedly mounted on the rotor shaft 22 through threaded connection, and the connection is firm and reliable.

In another embodiment of the present application, rollers 33 and grease are provided between the bearing outer ring 32 and the bearing inner ring 31. The capacitance formed mainly depends on the oil film. When the bearing 30 is stationary, the bearing capacitance is larger. After rotating, the higher the speed and the more uniform, the more uniform the bearing oil film is formed, and the smaller the corresponding bearing capacitance. Generally, after the speed exceeds 1500r/min, the bearing capacitance value is basically stable. According to the actual measurement of a commonly used 608 bearing, the bearing capacitances corresponding to 1000r/min, 1500r/min and 2000r/min are 55PF, 33PF, and 32PF respectively. That is, the basic value of the bearing capacitance is above 30PF. The electrode structure 60 is provided, and an adjustment capacitance C3 is formed between the electrode structure 60 shown in Figs. 1 and 4 and the rotor shaft 22, and an adjustment capacitance C3 is formed between the bearing bracket 40 and the electrode structure 60 shown in Figs. 9 to 13. The adjustment capacitance C3 is an air capacitance, and the relative dielectric constant and absolute dielectric constant of air are constant. Therefore, it is the distance and the facing area of the air gap that determines the adjustment capacitance C3. If the ratio of the facing area on both sides of the air gap to the distance of the air gap is greater than or equal to 3.4, the adjustment capacitance C3 greater than 30 PF can be formed. Furthermore, the adjustment capacitance C3 is greater than or much greater than the bearing capacitances Cb1 and Cb2, so that the electricity at both ends of the equivalent capacitance Cb can be more concentrated on both ends of the capacitance C3, which is equivalent to concentrated on the electrode structure 60 and the rotor shaft 22 (the first solution), or equivalent to concentrate on the electrode structure 60 and the bearing bracket 40 (the second solution), so that most of the current between the bearing bracket 40 and the rotor shaft 22 flows through the branch of the adjustment capacitance C3, to shunt the shaft current, thereby greatly reducing the current flowing through the bearing outer ring 32 and the bearing inner ring 31, that is, the shaft current. Therefore, the risk of electrical corrosion damage to the bearing 30 can be greatly reduced.

Specifically, referring to Figs. 1 and 4, when the first air gap 643 is formed between the sleeve portion 64 and the rotor shaft 22, the ratio of the facing area of the first air gap 643 to the distance of the first air gap 643 is greater than or equal to 3.4. Furthermore, the adjustment capacitance C3 is arranged larger or far larger than the bearing capacitances Cb1 and Cb2, so as to achieve the above-mentioned effect of reducing the shaft current and reducing the electric corrosion of the bearing 30.

Referring to Figs.9-13, when a second air gap 611 is formed between the first conductive cylinder 61 and the second conductive cylinder 45, and a third air gap 612is formed between the innermost second conductive cylinder 45 and the outer circumferential surface of the rotor shaft 22, the sum of the ratio of the facing area to the distance of the second air gap 611 and the ratio of the facing area to the distance of the third air gap 612 is greater than or equal to 3.4. Furthermore, the adjustment capacitance C3 is greater than or far greater than the bearing capacitances Cb1 and Cb2, so as to achieve the above-mentioned effect of reducing the shaft current and reducing the electric corrosion of the bearing 30.

Referring to Fig. 12, when a fourth air gap 651 is formed between the conductive electrode plate 65 and the bearing bracket 40, the ratio of the facing area to the distance of the fourth air gap 651 is greater than or equal to 3.4. Furthermore, the adjustment capacitance C3 is arranged larger or far larger than the bearing capacitances Cb1 and Cb2, so as to achieve the above-mentioned effect of reducing the shaft current and reducing the electric corrosion of the bearing 30.

In another embodiment of the present application, the electrode structure 60 is a metal member integrally molded, which can be easily processed by an integrally molded process. Specifically, the electrode structure 60 may be made of aluminum or other metal members, which can realize conductivity and is easy to be formed.

In another embodiment of the present application, an electrical equipment is provided, including the above-mentioned motor.

The traditional integrated bearing bracket is separated into the stator bracket portion 42 and the bearing support portion 41, and the bracket insulation layer 43 is provided between the stator bracket portion 42 and the bearing support portion 41, which is equivalent to adding an insulation layer capacitance C1 between the stator bracket portion 42 and the bearing support portion 41. The capacitance Cd between the bearing outer ring 32 and the stator core 11 is decomposed into the equivalent capacitance Cd2 after the capacitance C1 between the bearing support portion 41 and the stator bracket portion 42 and the capacitance C2 between the stator bracket portion 42 and the stator core 11 are connected in series, and then in parallel with the capacitance Cd1 between the bearing support portion 41 and the stator core 11.

The arrangement of the bracket insulation layer 43 can make the capacitance C1 much smaller than C2 and Cd2 smaller than C1 on the one hand; on the other hand, the bearing support portion 41 of the bearing bracket 40 can have no or reduce the area directly facing the stator core 11 in the axial direction of the motor, and be far away from the stator core 11, that is, the value of the capacitance Cd1 can also be small. Therefore, the equivalent capacitance Cd of the stator side can be greatly reduced.

In the loop of the high-frequency circuit, there is also a capacitance Cb between the bearing outer ring 32 and the bearing inner ring 31. The shaft voltage is the divided voltage between the two ends of the capacitance Cb. The capacitance Cd is equivalent to being connected in series on the outer ring side of the bearing of the capacitance Cb. Therefore, the capacitance Cd is reduced through the arrangement of the bracket insulation layer 43, so that the two ends of the capacitance Cb obtain a smaller divided voltage, that is, the shaft voltage is reduced, and the risk of electric corrosion of the bearing is effectively reduced. For motors with larger power and larger metal shells to increase the installation strength and ensure heat dissipation, the risk of electrical corrosion damage to the motor bearings 30 can also be reduced.

The electrode structure 60 is used to adjust the equivalent capacitance Cb between the bearing inner ring 31 and the bearing outer ring 32. The electrode structure 60 is electrically connected to the bearing bracket 40 and forms an adjustment capacitance C3 with the rotor shaft 22; or, the electrode structure 60 is electrically connected to the rotor shaft 22 and forms an adjustment capacitance C3 with the bearing bracket 40. The adjustment capacitance C3 is connected in parallel with the bearing capacitances Cb1 and Cb2 to increase the equivalent capacitance Cb and reduce the voltage difference between the two ends of the equivalent capacitance Cb. On the one hand, the parallel connection of the adjustment capacitance C3 will increase the equivalent capacitance Cb, such that the equivalent capacitance Cb obtain a smaller divided voltage, that is, the voltage difference between the bearing inner ring 31 and the bearing outer ring 32 is reduced, and the decreasing of the shaft voltage is realized. On the other hand, when the adjustment capacitance C3 is relatively large relative to the bearing capacitances Cb1 and Cb2, the current between the bearing bracket 40 and the rotor shaft 22 will flow through the branch of the adjustment capacitance C3 to shunt the shaft current, thereby reducing the current flowing through the bearing outer ring 32 and the bearing inner ring 31, that is, the shaft current, and therefore, the risk of electrical corrosion damage to the bearing 30 can be greatly reduced.

The motor and the electrical equipment with the motor can effectively reduce the motor shaft voltage, thereby reducing the risk of electrical corrosion damage to the motor bearing 30 and improving the reliability of the motor.

## Claims

1. A motor, comprising:
a stator (10), comprising a stator core (11) provided with windings (111);
a rotor (20), rotatably mounted with respect to the stator (10), wherein the rotor (20) comprises a rotor core (21) and a rotor shaft (22) located at a center of the rotor core (21) and connected to the rotor core (21);
a bearing (30), supporting the rotor shaft (22), and comprising a bearing inner ring (31) and a bearing outer ring (32);
a bearing bracket (40), comprising a bearing support portion (41) made of conductive material and configured for fixing and conducting the bearing outer ring (32); wherein at least one bearing bracket (40) further comprises a stator bracket portion (42) made of conductive material and configured for connection to the stator (10), the stator bracket portion (42) is located on the radially outer side of the bearing support portion (41), and a bracket insulation layer (43) is provided between the bearing support portion (41) and the stator bracket portion (42); **characterised by**
an electrode structure (60), configured for adjusting an equivalent capacitance between the bearing inner ring (31) and the bearing outer ring (32); wherein the electrode structure (60) is electrically connected with the bearing bracket (40) and an adjustment capacitance is formed between the electrode structure (60) and the rotor shaft (22) or the electrode structure (60) is electrically connected with the rotor shaft (22), and an adjustment capacitance is formed between the electrode structure (60) and the bearing bracket (40);
wherein two bearings (30) are provided, and the two bearings (30) are arranged on both sides of the rotor core (21) at intervals along an axial direction of the rotor core (21), and each of the bearings is connected to one bearing bracket (40), and wherein the bearing support portions (41) of the two bearing brackets (40) are electrically connected by a conductive member (50) and the conductive member (50) is insulated from the stator bracket portion (42).

2. The motor according to claim 1, wherein the stator bracket portion (42) is provided with a plurality of first arm portions (421) extending radially inwardly of the bearing bracket (40); and the bearing support portion (41) is provided with a plurality of second arm portions (412) extending radially outwardly of the bearing bracket (40); the first arm portions (421) and the second arm portions (412) are embedded in the bracket insulation layer (43); the first arm portions (421) and the second arm portions (412) are arranged in pairs, and at least partially opposite to each other in a radial direction of the bearing bracket (40).

3. The motor according to claim 1, wherein the stator bracket portion (42) is provided with a plurality of first through holes (422) extending in an axial direction of the bearing bracket (40), and the first through holes (422) are at least partially buried in the bracket insulation layer (43);
and/or, the bearing support portion (41) is provided with a plurality of second through holes extending in an axial direction of the motor, and the second through holes are at least partially buried in the bracket insulation layer (43).

4. The motor according to claim 1, wherein a rotor insulation layer (214) is provided between the rotor shaft (22) and an outer peripheral surface of the rotor core (21).

5. The motor according to claim 4, wherein an equivalent capacitance between the bearing outer ring (32) and the stator core (11) matches an equivalent capacitance between the bearing inner ring (31) and the stator core (11).

6. The motor according to any one of claims 1 to 5, wherein the electrode structure (60) comprises a shaft sleeve portion (64) provided on the bearing support portion (41) of at least one bearing bracket (40), and the shaft sleeve portion (64) is electrically connected to the bearing support portion (41), a first air gap (643) extending along a radial direction of the rotor shaft (22) is formed between the sleeve portion (64) and the rotor shaft (22), and a cross-sectional shape in a radial direction of the first air gap (643) is in a circular ring shape concentric with the rotor shaft (22).

7. The motor according to claim 6, wherein one end of the rotor shaft (22) in an axial direction is provided with a shaft hole (221) extending in the axial direction, and the sleeve portion (64) comprises an outer shaft sleeve located at an outer side of an outer peripheral surface of the rotor shaft (22) and an inner shaft sleeve extending into the shaft hole (221), and the inner shaft sleeve is located inside the outer shaft sleeve.

8. The motor according to claim 6, wherein a ratio of a facing area to a distance of the first air gap (643) is greater than or equal to 3.4.

9. The motor according to any one of claims 1 to 5, wherein the electrode structure (60) is arranged on the rotor shaft (22) and the electrode structure (60) is a metal member integrally molded.

10. The motor according to claim 9,
wherein the electrode structure (60) comprises a plurality of first conductive cylinders (61) sequentially sleeved and arranged at intervals, the first conductive cylinders (61) are arranged around the rotor shaft (22) and are extended along the axial direction, and the first conductive cylinders (61) are electrically connected to the rotor shaft (22);
a plurality of second conductive cylinders (45) are arranged on the bearing support portion (41) of the bearing bracket (40) close to the electrode structure (60), the second conductive cylinders (45) are arranged around the rotor shaft (22) and are extend along the axial direction, and the conductive cylinders are electrically connected to the bearing support portion (41); and
the first conductive cylinders (61) and the second conductive cylinders (45) are arranged oppositely in a radial direction of the motor, and a second air gap (611) extending along the axial direction of the rotor shaft (22) is formed between the first conductive cylinders (61) and the second conductive cylinders (45).

11. The motor according to claim 10, wherein a third air gap (612) extending in the axial direction of the rotor shaft (22) is formed between a second conductive cylinder (45) of the plurality of second conductive cylinders (45) closest to the rotor shaft (22) and an outer circumferential surface of the rotor shaft (22), and cross-sectional shapes in radial direction of the second air gap (611) and the third air gap (612) are in a circular ring shape concentric with the rotor shaft (22).

12. The motor according to claim 11, wherein a sum of a ratio of a facing area to a distance of the second air gap (611) and a ratio of a facing area to a distance of the third air gap (612) is greater than or equal to 3.4.

13. The motor according to claim 9, wherein the electrode structure (60) comprises a conductive electrode plate (65) connected to the rotor shaft (22) and extending radially along the rotor shaft (22), and the bearing bracket (40) close to the conductive electrode plate (65) is a metal member, and a fourth air gap (651) is formed between the conductive electrode plate (65) and the bearing bracket (40).

## Patentansprüche

1. Motor, Folgendes umfassend:
einen Stator (10), der einen Statorkern (11) umfasst, der mit Wicklungen (111) versehen ist,
einen Rotor (20), der drehbar in Bezug auf den Stator (10) montiert ist, wobei der Rotor (20) einen Rotorkern (21) und eine Rotorwelle (22) umfasst, die sich in einer Mitte des Rotorkerns (21) befindet und mit dem Rotorkern (21) verbunden ist,
ein Lager (30), das die Rotorwelle (22) trägt und einen Lagerinnenring (31) und einen Lageraußenring (32) umfasst,
eine Lagerhalterung (40), die einen Lagertrageabschnitt (41) umfasst, der aus leitendem Material besteht und dafür gestaltet ist, den Lageraußenring (32) zu fixieren und leitend zu machen, wobei mindestens eine Lagerhalterung (40) ferner einen Statorhalterungsabschnitt (42) umfasst, der aus leitendem Material besteht und zum Verbinden mit dem Stator (10) gestaltet ist, wobei sich der Statorhalterungsabschnitt (42) an der radial äußeren Seite des Lagertrageabschnitts (41) befindet und eine Halterungsisolationsschicht (43) zwischen dem Lagertrageabschnitt (41) und dem Statorhalterungsabschnitt (42) bereitgestellt ist, **gekennzeichnet durch**
eine Elektrodenstruktur (60), die zum Justieren einer äquivalenten Kapazität zwischen dem Lagerinnenring (31) und dem Lageraußenring (32) gestaltet ist, wobei die Elektrodenstruktur (60) elektrisch mit der Lagerhalterung (40) verbunden ist und eine Justierungskapazität zwischen der Elektrodenstruktur (60) und der Rotorwelle (22) gebildet ist, oder
die Elektrodenstruktur (60) elektrisch mit der Rotorwelle (22) verbunden ist und eine Justierungskapazität zwischen der Elektrodenstruktur (60) und der Lagerhalterung (40) gebildet ist,
wobei zwei Lager (30) bereitgestellt sind und die zwei Lager (30) an beiden Seiten des Rotorkerns (21) in Intervallen entlang einer axialen Richtung des Rotorkerns (21) angeordnet sind und jedes der Lager mit einer Lagerhalterung (40) verbunden ist und wobei die Lagertrageabschnitte (41) der zwei Lagerhalterungen (40) durch eine leitendes Element (50) elektrisch verbunden sind und das leitende Element (50) von dem Statorhalterungsabschnitt (42) isoliert ist.

2. Motor nach Anspruch 1, wobei der Statorhalterungsabschnitt (42) mit mehreren ersten Armabschnitten (421) versehen ist, die sich von der Lagerhalterung (40) radial einwärts erstrecken, und der Lagertrageabschnitt (41) mit mehreren zweiten Armabschnitten (412) versehen ist, die sich von der Lagerhalterung (40) radial auswärts erstrecken, wobei die ersten Armabschnitte (421) und die zweiten Armabschnitte (412) in die Halterungsisolationsschicht (43) eingebettet sind, wobei die ersten Armabschnitte (421) und die zweiten Armabschnitte (412) in Paaren angeordnet sind und einander in einer radialen Richtung der Lagerhalterung (40) zumindest teilweise gegenüberliegen.

3. Motor nach Anspruch 1, wobei der Statorhalterungsabschnitt (42) mit mehreren ersten Durchgangsöffnungen (422) versehen ist, die sich ein einer axialen Richtung der Lagerhalterung (40) erstrecken, und wobei die ersten Durchgangsöffnungen (422) zumindest teilweise in die Halterungsisolationsschicht (43) eingelassen sind,
und/oder der Lagertrageabschnitt (41) mit mehreren zweiten Durchgangsöffnungen versehen ist, die sich in einer axialen Richtung des Motors erstrecken, und die zweiten Durchgangsöffnungen zumindest teilweise in die Halterungsisolationsschicht (43) eingelassen sind.

4. Motor nach Anspruch 1, wobei eine Rotorisolationsschicht (214) zwischen der Rotorwelle (22) und einer Außenumfangsfläche des Rotorkerns (21) bereitgestellt ist.

5. Motor nach Anspruch 4, wobei eine äquivalente Kapazität zwischen dem Lageraußenring (32) und dem Statorkern (11) mit einer äquivalenten Kapazität zwischen dem Lagerinnenring (31) und dem Statorkern (11) übereinstimmt.

6. Motor nach einem der Ansprüche 1 bis 5, wobei die Elektrodenstruktur (60) einen Wellenhülsenabschnitt (64) umfasst, die an dem Lagertrageabschnitt (41) mindestens einer Lagerhalterung (40) bereitgestellt ist, und wobei der Wellenhülsenabschnitt (64) elektrisch mit dem Lagertrageabschnitt (41) verbunden ist, zwischen dem Hülsenabschnitt (64) und der Rotorwelle (22) ein erster Luftspalt (643) gebildet ist, der sich entlang einer radialen Richtung der Rotorwelle (22) erstreckt, und eine Querschnittsform des ersten Luftspalts (643) in einer radialen Richtung eine kreisförmige Ringform aufweist, die mit der Rotorwelle (22) konzentrisch ist.

7. Motor nach Anspruch 6, wobei ein Ende der Rotorwelle (22) in einer axialen Richtung mit einem Wellenloch (221) versehen ist, das sich in der axialen Richtung erstreckt, und der Hülsenabschnitt (64) eine äußere Wellenhülse umfasst, die sich an einer Außenseite einer Außenumfangsfläche der Rotorwelle (22) befindet, und eine innere Wellenhülse, die sich in das Wellenloch (221) erstreckt, wobei sich die innere Wellenhülse im Inneren der äußeren Wellenhülse befindet.

8. Motor nach Anspruch 6, wobei ein Verhältnis eines Flächeninhalts zu einer Distanz des ersten Luftspalts (643) größer oder gleich 3,4 ist.

9. Motor nach einem der Ansprüche 1 bis 5, wobei die Elektrodenstruktur (60) an der Rotorwelle (22) angeordnet ist und die Elektrodenstruktur (60) ein integral ausgeformtes Metallelement ist.

10. Motor nach Anspruch 9, wobei die Elektrodenstruktur (60) mehrere erste leitende Zylinder (61) umfasst, die nacheinander aufgehülst und in Intervallen angeordnet sind, wobei die ersten leitenden Zylinder (61) um die Rotorwelle (22) herum angeordnet sind und sich in der axialen Richtung erstrecken, und die ersten leitenden Zylinder (61) elektrisch mit der Rotorwelle (22) verbunden sind,
wobei mehrere zweite leitende Zylinder (45) an dem Lagertrageabschnitt (41) der Lagerhalterung (40) nahe der Elektrodenstruktur (60) angeordnet sind, wobei die zweiten leitenden Zylinder (45) um die Rotorwelle (22) herum angeordnet sind und sich in der axialen Richtung erstrecken, und die leitenden Zylinder elektrisch mit dem Lagertrageabschnitt (41) verbunden sind, und
wobei die ersten leitenden Zylinder (61) und die zweiten leitenden Zylinder (45) in einer radialen Richtung des Motors gegenüberliegend angeordnet sind, und wobei zwischen den ersten leitenden Zylindern (61) und den zweiten leitenden Zylindern (45) ein zweiter Luftspalt (611) gebildet ist, der sich entlang der axialen Richtung der Rotorwelle (22) erstreckt.

11. Motor nach Anspruch 10, wobei zwischen einem zweiten leitenden Zylinder (45) der mehreren zweiten leitenden Zylinder (45), welcher der Rotorwelle (22) am nächsten liegt, und einer Außenumfangsfläche der Rotorwelle (22) ein dritter Luftspalt (612) gebildet ist, der sich in der axialen Richtung der Rotorwelle (22) erstreckt, und wobei Querschnittsformen des zweiten Luftspalts (611) und des dritten Luftspalts (612) in der radialen Richtung eine kreisförmige Ringform aufweisen, die mit der Rotorwelle (22) konzentrisch ist.

12. Motor nach Anspruch 11, wobei eine Summe aus einem Verhältnis eines Flächeninhalts zu einer Distanz des zweiten Luftspalts (611) und einem Verhältnis eines Flächeninhalts zu einer Distanz des dritten Luftspalts (612) größer oder gleich 3,4 ist.

13. Motor nach Anspruch 9, wobei die Elektrodenstruktur (60) eine leitende Elektrodenplatte (65) umfasst, die mit der Rotorwelle (22) verbunden ist und sich radial entlang der Rotorwelle (22) erstreckt, und wobei die Lagerhalterung (40) nahe der leitenden Elektrodenplatte (65) ein Metallelement ist und zwischen der leitenden Elektrodenplatte (65) und der Lagerhalterung (40) ein vierter Luftspalt (651) gebildet ist.

## Revendications

1. Moteur, comportant :
un stator (10), comportant un noyau de stator (11) doté d'enroulements (111) ;
un rotor (20), monté de manière rotative par rapport au stator (10), dans lequel le rotor (20) comporte un noyau de rotor (21) et un arbre de rotor (22) situé au centre du noyau de rotor (21) et connecté au noyau de rotor (21) ;
un roulement (30), supportant l'arbre du rotor (22), et comportant une bague intérieure de roulement (31) et une bague extérieure de roulement (32) ;
un support de roulement (40), comportant une partie de support de roulement (41) réalisée à partir d'un matériau conducteur et configurée pour fixer la bague extérieure de roulement (32) et la rendre conductrice ; dans lequel au moins un support de roulement (40) comporte par ailleurs une partie de support de stator (42) réalisée à partir d'un matériau conducteur et configurée à des fins de connexion au stator (10), la partie de support de stator (42) est située sur le côté radialement extérieur de la partie de support de roulement (41), et une couche isolante de support (43) est mise en œuvre entre la partie de support de roulement (41) et la partie de support de stator (42) ; **caractérisé par**
une structure d'électrode (60), configurée pour ajuster une capacité équivalente entre la bague intérieure de roulement (31) et la bague extérieure de roulement (32) ; dans lequel la structure d'électrode (60) est connectée électriquement au support de roulement (40) et une capacité de réglage est formée entre la structure d'électrode (60) et l'arbre de rotor (22) ou la structure d'électrode (60) est connectée électriquement à l'arbre de rotor (22), et une capacité de réglage est formée entre la structure d'électrode (60) et le support de roulement (40) ;
dans lequel deux roulements (30) sont mis en œuvre, et les deux roulements (30) sont agencés des deux côtés du noyau de rotor (21) selon des intervalles le long d'une direction axiale du noyau de rotor (21), et chacun des roulements est connecté à un support de roulement (40), et dans lequel les parties de support de roulement (41) des deux supports de roulement (40) sont électriquement connectées par un élément conducteur (50) et l'élément conducteur (50) est isolé par rapport à la partie de support de stator (42).

2. Moteur selon la revendication 1, dans lequel la partie de support de stator (42) est dotée d'une pluralité de premières parties de bras (421) s'étendant radialement vers l'intérieur du support de roulement (40) ; et la partie de support de roulement (41) est dotée d'une pluralité de deuxièmes parties de bras (412) s'étendant radialement vers l'extérieur du support de roulement (40) ; les premières parties de bras (421) et les deuxièmes parties de bras (412) sont noyées dans la couche isolante de support (43) ; les premières parties de bras (421) et les deuxièmes parties de bras (412) sont agencées par paires et au moins partiellement opposées les unes par rapport aux autres dans une direction radiale du support de roulement (40).

3. Moteur selon la revendication 1, dans lequel la partie de support de stator (42) est dotée d'une pluralité de premiers trous traversants (422) s'étendant dans une direction axiale du support de roulement (40), et les premiers trous traversants (422) sont au moins partiellement enfouis dans la couche isolante de support (43) ;
et/ou, la partie de support de roulement (41) est dotée d'une pluralité de deuxièmes trous traversants s'étendant dans une direction axiale du moteur, et les deuxièmes trous traversants sont au moins partiellement enfouis dans la couche isolante de support (43).

4. Moteur selon la revendication 1, dans lequel une couche isolante de rotor (214) est mise en œuvre entre l'arbre de rotor (22) et une surface périphérique extérieure du noyau de rotor (21).

5. Moteur selon la revendication 4, dans lequel une capacité équivalente entre la bague extérieure de roulement (32) et le noyau de stator (11) correspond à une capacité équivalente entre la bague intérieure de roulement (31) et le noyau de stator (11).

6. Moteur selon l'une quelconque des revendications 1 à 5, dans lequel la structure d'électrode (60) comporte une partie de manchon d'arbre (64) mise en œuvre sur la partie de support de roulement (41) d'au moins un support de roulement (40), et la partie de manchon d'arbre (64) est connectée électriquement à la partie de support de roulement (41), un premier entrefer (643) s'étendant le long d'une direction radiale de l'arbre de rotor (22) est formé entre la partie de manchon (64) et l'arbre de rotor (22), et une forme de section transversale dans une direction radiale du premier entrefer (643) est en forme d'anneau circulaire concentrique par rapport à l'arbre de rotor (22).

7. Moteur selon la revendication 6, dans lequel une extrémité de l'arbre de rotor (22) dans une direction axiale est dotée d'un trou d'arbre (221) s'étendant dans la direction axiale, et la partie de manchon (64) comporte un manchon d'arbre extérieur situé au niveau d'un côté extérieur d'une surface périphérique extérieure de l'arbre de rotor (22) et un manchon d'arbre intérieur s'étendant jusque dans le trou d'arbre (221), et le manchon d'arbre intérieur est situé à l'intérieur du manchon d'arbre extérieur.

8. Moteur selon la revendication 6, dans lequel un rapport entre une zone de face et une distance du premier entrefer (643) est supérieur ou égal à 3,4.

9. Moteur selon l'une quelconque des revendications 1 à 5, dans lequel la structure d'électrode (60) est agencée sur l'arbre de rotor (22) et la structure d'électrode (60) est un élément métallique moulé intégralement.

10. Moteur selon la revendication 9, dans lequel la structure d'électrode (60) comporte une pluralité de premiers cylindres conducteurs (61) chemisés de manière séquentielle et agencés selon des intervalles, les premiers cylindres conducteurs (61) sont agencés autour de l'arbre de rotor (22) et s'étendent le long de la direction axiale, et les premiers cylindres conducteurs (61) sont connectés électriquement à l'arbre de rotor (22) ;
une pluralité de deuxièmes cylindres conducteurs (45) sont agencés sur la partie de support de roulement (41) du support de roulement (40) à proximité de la structure d'électrode (60), les deuxièmes cylindres conducteurs (45) sont agencés autour de l'arbre de rotor (22) et s'étendent le long de la direction axiale, et les cylindres conducteurs sont connectés électriquement à la partie de support de roulement (41) ; et
les premiers cylindres conducteurs (61) et les deuxièmes cylindres conducteurs (45) sont agencés à l'opposé l'un par rapport à l'autre dans une direction radiale du moteur, et un deuxième entrefer (611) s'étendant le long de la direction axiale de l'arbre de rotor (22) est formé entre les premiers cylindres conducteurs (61) et les deuxièmes cylindres conducteurs (45).

11. Moteur selon la revendication 10, dans lequel un troisième entrefer (612) s'étendant dans la direction axiale de l'arbre de rotor (22) est formé entre un deuxième cylindre conducteur (45) de la pluralité de deuxièmes cylindres conducteurs (45) le plus proche de l'arbre de rotor (22) et une surface circonférentielle extérieure de l'arbre de rotor (22), et les formes de section transversale dans la direction radiale du deuxième entrefer (611) et du troisième entrefer (612) sont en forme d'anneau circulaire concentrique par rapport à l'arbre de rotor (22).

12. Moteur selon la revendication 11, dans lequel une somme d'un rapport entre une zone de face et une distance du deuxième entrefer (611) et d'un rapport entre une zone de face et une distance du troisième entrefer (612) est supérieure ou égale à 3,4.

13. Moteur selon la revendication 9, dans lequel la structure d'électrode (60) comporte une plaque d'électrode conductrice (65) connectée à l'arbre de rotor (22) et s'étendant radialement le long de l'arbre de rotor (22), et le support de roulement (40) à proximité de la plaque d'électrode conductrice (65) est un élément métallique, et un quatrième entrefer (651) est formé entre la plaque d'électrode conductrice (65) et le support de roulement (40).
